# EUROPEAN PATENT SPECIFICATION

(11) **EP 0 369 830 B1**
(45) Date of publication and mention of the grant of the patent: **12.02.1997**
(21) Application number: 89312021.2
(22) Date of filing: 20.11.1989
(51) Int. Cl.: H04J 3/14, H03G 3/20

(54) **Predictive automatic gain control (AGC) in time-division- multiplex (TDM) systems**
Prädikative automatische Verstärkungsregelungsschaltung in Zeitmultiplexsystemen
Commande automatique de gain (AGC) à prédiction dans des systèmes à multiplexage temporel

(30) Priority: 18.11.1988 US 274229
(43) Date of publication of application: 23.05.1990
(73) Proprietor: MOTOROLA, INC., Schaumburg, IL 60196 (US)
(72) Inventor: Shamasundara, H. N., Arlington Heights Illinois 60004 (US)
(74) Representative: Ibbotson, Harold

(56) References cited:
- WO-A-86/00769
- US-A- 4 168 399
- ICC 1985 vol. 2, 23 June 1985, Chicago, US, pp 729-734; H. NAKAYAMA ET AL.: '26 GHZ BAND DIGITAL RADIO SYSTEM (26SS-D1) FOR HIGH-SPEED DIGITAL COMMUNICATIONS'

## Description

### FIELD OF INVENTION

This invention is concerned with controlling the sensitivity of radio receivers. More particularly, this invention relates to ways of adjusting the gain of a cellular base receiver as a function of mobile transmitter range.

### BACKGROUND OF THE INVENTION

Ordinarily, the requisite gain for a communications session between a cellular base site receiver having limited dynamic range and a given cellular mobile radio transmitter is derived from earlier signal strength measurements taken from previous transmissions from the same mobile transmitter. However, where a history of prior transmissions does not exist, particularly with the reception of bursty transmissions, establishing the requisite gain for receivers with limited dynamic range represents a formidable challenge.

In wideband Time Division multiplexed Multiple Access (TDMA) systems, an RF channel is time-shared by multiple users who must be synchronized to the system. When bursty transmissions are used for initial access to the system, particularly when they are foreshortened burst transmissions to allow some access tolerance for those accessing the system for the first time, there is no history of prior transmissions from which to derive the requisite gain information. Traditional approaches to this type of problem include fast Automatic Gain Control (AGC) loops (which commonly experience stability difficulties) and long preamble training sequences to allow the AGC loop to stabilize. But in many bursty transmission systems, like the TDMA cellular system presently proposed in Europe, long training sequences are simply not feasible or available.

WO 86/00769 describes a self-calibrating signal strength detector, whereas the article entitled "26 GHz Band Digital Subscriber Radio System (26SS-D1) for High-Speed Digital Communications", by Nakayama et al., published in IEEE International Conference on Communications, vol. 2, pages 729 to 734, 23 June 1985, Chicago, describes a communication system that compensates for propagation delay time.

US-A-4,168,399 describes a system that automatically compensates for line loss by increasing the gain of the receiver upon detecting the presence of a call.

This invention has, then, as its object to provide a predictive AGC in TDMA systems and overcome these challenges. It has the advantage of being able to utilize receivers with normal dynamic range, maintain brief preamble sequences, assure AGC stability and accommodate local propagation conditions in its path loss prediction.

### SUMMARY OF THE INVENTION

According to a first aspect of the present invention there is provided a method of controlling the sensitivity of a receiver for use in a communication system having a time base for system synchronization, the method comprising the steps of: receiving a radio signal that was predeterminally transmitted by a transmitter relative to the time base; determining a delay time in time between the instant of radio signal transmission by the transmitter and the instant of radio signal reception by the receiver; wherein said method is characterized by the steps of: increasing the gain of the receiver from a minimum sensitivity at the predetermined transmission instant to a maximum sensitivity over a time period equivalent to the delay time; and nominally maintaining the gain of the receiver at the level prevailing at the instant the radio signal is received.

In a preferred embodiment, the step of increasing the gain comprises the steps of: determining an attenuation function of the radio signal; and increasing the gain of the receiver as a nominal reciprocal of the attenuation function from the minimum sensitivity at the predetermined transmission instant to the maximum sensitivity over the time period. In another embodiment, the method further comprises the step of: equalizing an amplitude of the received radio signal to maintain a constant receiver output signal level.

In a second aspect of the present invention there is provided a receiver of a communications system having a time base for system synchronization, the receiver comprising: means for receiving a radio signal that was predeterminally transmitted by a transmitter relative to the time base; means for determining a delay time in time between the instant of radio signal transmission by the transmitter and the instant of radio signal reception by the receiver; wherein said receiver is characterized by: means for increasing the gain of the receiver from a minimum sensitivity at the predetermined transmission instant to a maximum sensitivity over a time period equivalent to the delay time; and means for nominally maintaining the gain of the receiver at the level prevailing at the instant the radio signal is received.

An exemplary embodiment of the present invention will now be described with reference to the accompanying drawings.

### BRIEF DESCRIPTION OF THE DRAWINGS

FIG. 1 is a functional block diagram of the present invention which incorporates the preferred embodiment of the present invention and incorporates the best mode for carrying out the invention.

FIG. 2 is a graph of a received signal strength attenuation versus time and distance).

FIG. 3 is a graph of receiver gain versus time (and distance).

FIG. 4 is a graph of amplitude-equalized transmission bursts versus time (and distance).

### DETAILED DESCRIPTION OF A PREFERRED EMBODIMENT

It is herein proposed to estimate the expected nominal path loss of the signal and predict the requisite gain from TDMA synchronization information. From the system's synchronization information, the propagation delay (the time between signal transmission by the mobile transmitter and reception by the base site receiver) can be determined. Propagation delay is linearly proportional to distance which, in turn, is the primary determiner of path loss. This path loss is somewhat variable with terrain and can be made part of and calibrated into the gain prediction. Thus, the requisite gain to compensate for the total path loss can be estimated as a function of propagation delay and local propagation conditions. Hence, the dynamic range of the receiver need only be able to cover the residual error of the estimate rather than the entire possible signal attenuation.

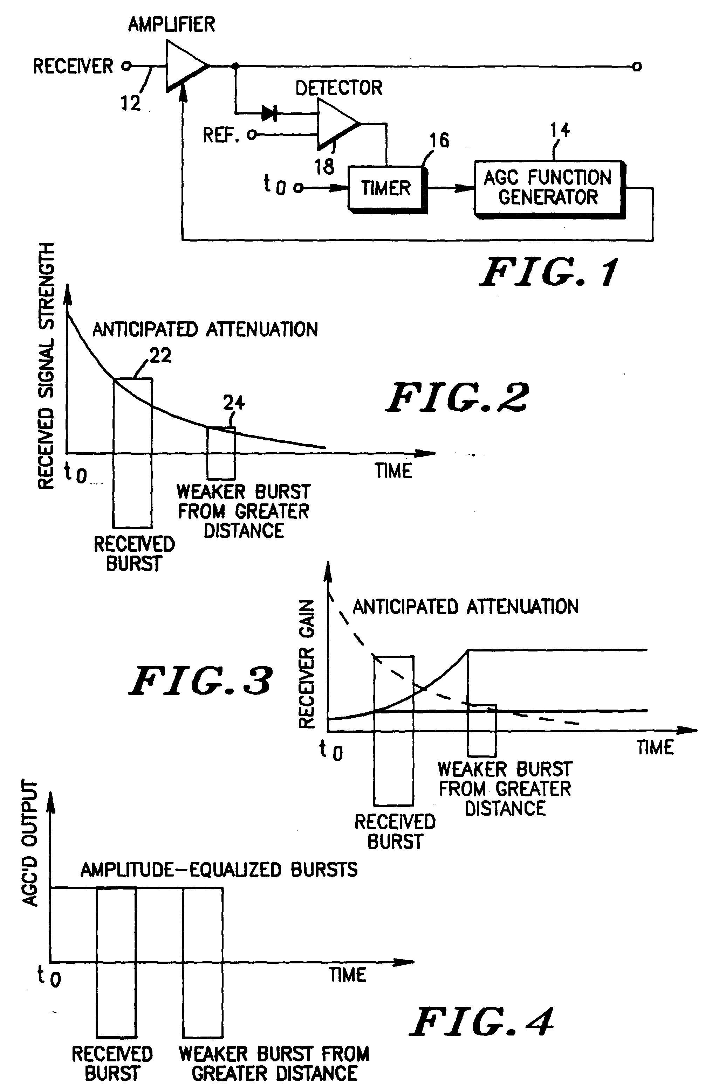

As illustrated in FIG. 2, the received signal strength of a transmitted burst predictably attenuates with time (and distance), although somewhat dependent upon local propagation conditions, such as terrain. As illustrated in FIG. 3, if, in time synchronism with the transmission instant (t₀), the receiver's gain is increased as the nominal reciprocal of the attenuation function until the burst transmission is received and then the gain is held at that level, all bust transmissions will be amplitude-equalized, as illustrated in FIG. 4.

FIG. 1 is a functional block diagram of the invention. FIG. 1 illustrates a timer 16 that, when started (t₀) by the receiver's TDMA controller (not shown), provides the timing for an AGC function generator 14. The AGC function generator 14 is coupled to the control input of an AGC amplifier that controls the gain of the received signal 12. The gain-controlled output of the AGC amplifier is coupled to a differential amplifier, threshold detector 18 that stops the timer 16 when the gain controlled signal exceeds a threshold (REF.).

In operation, the receiver's TDMA controller starts a timer 16 in synchronism with the pre-established time base of the TDM time slots for burst transmissions. From the pre-established transmission instant (t₀), the AGC function generator 14 generates an increasing gain function that is the nominal reciprocal of the signal attenuation function. The received signal 12 is increasing gain amplified by an AGC amplifier until its amplitude exceeds a given threshold (REF.) in the threshold detector 18 ad stops the timer 16. The AGC function generator output is then held at that prevailing gain level.The AGC function generator 14 may comprise a continuous voltage ramp generator followed by a sample and hold circuit under control of the threshold detector 18 or as a look-up table generator with elapsed time input (T), both of which are well known to those ordinarily skilled in this field. The AGC function generator 14 operates to increase the gain of the receiver from a minimum sensitivity at the predetermined transmission instant (t₀) to a maximum sensitivity at the maximum range (maximum expected transit time) and then nominally maintains the receiver's gain at the level prevailing at the instant the signal is received.

Either AGC function generator may be calibrated for local propagation conditions, such as terrain, to track the variance in propagation delay and the conditions affecting it.

This invention advantageously enables the use of receivers with normal dynamic range, maintains the use of the briefest preamble sequences, assures AGC stability and accommodates local propagation conditions in its path loss prediction.

Thus, in a communications system having a time base for system synchronization, there has been provided a method and apparatus for controlling the sensitivity of a receiver comprising the steps of (a) receiving a signal that was predeterminally transmitted by another relative to the time base (wherein signal reception is confirmed when the amplitude of the received signal exceeds a pre-established threshold), (b) determining signal transit time from the time difference between the instant of signal reception relative to the time base and the instant of signal transmission relative to the time base, (c) controlling the sensitivity of the receiver as a function of the transit time by: (1) increasing the gain of the receiver from a minimum sensitivity at the predetermined transmission instant to a maximum sensitivity at maximum range (maximum expected transit time) and (2) nominally maintaining the receiver's gain at the level prevailing at the instant the signal is received.

## Claims

1. A method of controlling the sensitivity of a receiver for use in a communication system having a time base for system synchronization, the method comprising the steps of:
receiving a radio signal (12) that was predeterminally transmitted by a transmitter relative to the time base;
determining a delay time in time between the instant of radio signal transmission by the transmitter and the instant of radio signal reception by the receiver;
wherein said method is characterized by the steps of:
increasing the gain of the receiver from a minimum sensitivity at the predetermined transmission instant to a maximum sensitivity over a time period equivalent to the delay time; and
nominally maintaining the gain of the receiver at the level prevailing at the instant the radio signal is received.

2. The method of claim 1, wherein the step of increasing the gain is characterized by the steps of:
determining an attenuation function of the radio signal; and
increasing the gain of the receiver as a nominal reciprocal of the attenuation function from the minimum sensitivity at the predetermined transmission instant to the maximum sensitivity over the time period.

3. The method of either claim 1 or claim 2 further comprising the step of equalizing an amplitude of the received radio signal to maintain a constant receiver output signal level.

4. The method of any one of claims 1, 2, or 3, wherein radio signal reception is confirmed when the amplitude of the received radio signal exceeds a predetermined threshold (REF).

5. A receiver of a communications system having a time base for system synchronization, the receiver comprising:
means for receiving a radio signal (12) that was predeterminally transmitted by a transmitter relative to the time base;
means (16) for determining a delay time in time between the instant (t₀) of radio signal transmission by the transmitter and the instant of radio signal reception by the receiver;
wherein said receiver is characterized by:
means (14) for increasing the gain of the receiver from a minimum sensitivity at the predetermined transmission instant (t₀) to a maximum sensitivity over a time period equivalent to the delay time; and
means for nominally maintaining the gain of the receiver at the level prevailing at the instant the radio signal is received.

6. The receiver of claim 5 further characterized by:
means for determining an attenuation function of the radio signal; and
means for increasing the gain of the receiver as a nominal reciprocal of the attenuation function from the minimum sensitivity at the predetermined transmission instant to the maximum sensitivity over the time period.

7. The receiver of either claim 5 or claim 6 further comprising means for equalizing an amplitude of the received radio signal to maintain a constant receiver output signal level.

8. The receiver of any one of claims 5, 6, or 7 further comprising means for calibrating the sensitivity of the receiver for local propagation conditions.

9. The receiver of any one of claims 5 to 8, further comprising means for calibrating the sensitivity of the receiver for local terrain.

## Patentansprüche

1. Verfahren zum Steuern der Empfindlichkeit eines Empfängers zur Verwendung in einem Kommunikationssystem, das eine Zeitbasis für eine Systemsynchronisation besitzt, wobei das Verfahren die Schritte aufweist:
Empfangen eines Funksignals (12), das vorbestimmt durch einen Sender relativ zu der Zeitbasis übertragen wurde;
Bestimmen einer Verzögerungszeit in der Zeit zwischen dem Zeitpunkt einer Funksignalübertragung durch den Sender und dem Zeitpunkt eines Funksignalempfangs durch den Empfänger;
wobei das Verfahren durch die Schritte gekennzeichnet ist:
Erhöhen der Verstärkung des Empfängers von einer minimalen Empfindlichkeit zu dem vorbestimmten Übertragungsmoment auf eine maximale Empfindlichkeit über eine Zeitperiode äquivalent zu der Verzögerungszeit; und
nominal Beibehalten der Verstärkung des Empfängers auf dem Pegel, der zu dem Zeitpunkt, zu dem das Funksignal empfangen ist, vorherrscht.

2. Verfahren nach Anspruch 1, wobei der Schritt eines Erhöhens der Verstärkung gekennzeichnet ist durch die Schritte:
Bestimmen einer Dämpfungsfunktion des Funksignals; und
Erhöhen der Verstärkung des Empfängers als ein nominales Reziprokes der Dämpfungsfunktion von der minimalen Empfindlichkeit bei dem vorbestimmten Übertragungsmoment zu der maximalen Empfindlichkeit über die Zeitperiode.

3. Verfahren nach Anspruch 1 oder Anspruch 2, das weiterhin den Schritt eines Abgleichens einer Amplitude des empfangen Funksignals aufweist, um einen konstanten Empfängerausgangs-Signalpegel beizubehalten.

4. Verfahren nach einem der Ansprüche 1, 2 oder 3, wobei der Funksignalempfang bestätigt wird, wenn die Amplitude des empfangenen Funksignals einen vorbestimmten Schwellwert (REF) übersteigt.

5. Empfänger eines Funkkommunikationssystems, das eine Zeitbasis für eine Systemsynchronisation besitzt, wobei der Empfänger aufweist:
eine Einrichtung zum Empfangen eines Funksignals (12), das vorbestimmt durch einen Sender, relativ zu der Zeitbasis übertragen ist;
eine Einrichtung (16) zum Bestimmen einer Verzögerungszeit in der Zeit zwischen dem Zeitpunkt (t₀) einer Funksignalübertragung durch den Sender und dem Zeitpunkt eines Funksignalempfangs durch den Empfänger;
wobei der Empfänger gekennzeichnet ist durch:
eine Einrichtung (14) zum Erhöhen der Verstärkung des Empfängers von einer minimalen Empfindlichkeit zu dem vorbestimmten Übertragungszeitpunkt (t₀) zu einer maximalen Empfindlichkeit über eine Zeitperiode äquivalent zu der Verzögerungszeit; und
eine Einrichtung zum nominalen Beibehalten der Verstärkung des Empfängers auf dem Pegel, der zu dem Zeitpunkt, zu dem das Funksignal empfangen ist, vorherrscht.

6. Empfänger nach Anspruch 5, der weiterhin gekennzeichnet ist durch:
eine Einrichtung zum Bestimmen einer Dämpfungsfunktion des Funksignals; und eine Einrichtung zum Erhöhen der Verstärkung des Empfängers als ein nominales Reziprokes der Dämpfungsfunktion von der minimalen Empfindlichkeit zu dem vorbestimmten Übertragungszeitpunkt zu der maximalen Empfindlichkeit über die Zeitperiode.

7. Empfänger nach Anspruch 5 oder Anspruch 6, der weiterhin eine Einrichtung zum Abgleichen einer Amplitude des empfangenen Funksignals aufweist, um einen konstanten Empfängerausgangs-Signalpegel beizubehalten.

8. Empfänger nach einem der Ansprüche 5, 6 oder 7, der weiterhin eine Einrichtung zum Kalibrieren der Empfindlichkeit des Empfängers für lokale Ausbreitungsbedingungen aufweist.

9. Empfänger nach einem der Ansprüche 5 bis 8, der weiterhin eine Einrichtung zum Kalibrieren der Empfindlichkeit des Empfängers für ein lokales Terrain aufweist.

## Revendications

1. Procédé permettant de commander la sensibilité d'un récepteur pouvant être utilisé dans un système de communication ayant une base de temps pour permettre une synchronisation du système, le procédé comprenant les étapes de :
réception d'un signal radio (12) émis de façon prédéterminée par un émetteur par rapport à la base de temps ;
détermination d'un retard entre l'instant de l'émission du signal radio par l'émetteur et l'instant de la réception du signal radio par le récepteur ;
dans lequel ledit procédé est caractérisé par les étapes de :
augmentation du gain du récepteur d'une sensibilité minimum, à l'instant d'émission prédéterminé, à une sensibilité maximum, sur une période de temps équivalente au retard ; et
maintien nominal du gain du récepteur au niveau qui prévaut à l'instant où le signal radio est reçu.

2. Procédé selon la revendication 1, dans lequel l'étape d'augmentation du gain est caractérisé par les étapes de :
détermination d'une fonction d'atténuation du signal radio ; et
augmentation du gain du récepteur en tant que réciproque nominale de la fonction d'atténuation de la sensibilité minimum, à l'instant prédéterminé, à la sensibilité maximum, au cours de la période de temps.

3. Procédé selon la revendication 1 ou la revendication 2, comprenant en outre l'étape d'égalisation d'une amplitude du signal radio reçu afin de maintenir constant un niveau de signal de sortie du récepteur.

4. Procédé selon l'une quelconque des revendications 1, 2 ou 3, dans lequel la réception du signal radio est confirmée lorsque l'amplitude du signal radio reçu dépasse un seuil prédéterminé (REF).

5. Récepteur d'un système de communication ayant une base de temps pour permettre une synchronisation du système, le récepteur comprenant :
un moyen permettant de recevoir un signal radio (12) émis de façon prédéterminée par un émetteur par rapport à la base de temps ;
un moyen (16) permettant de déterminer un retard entre l'instant (t₀) de l'émission du signal radio par l'émetteur et l'instant de la réception du signal radio par le récepteur ;
dans lequel ledit récepteur est caractérisé par :
un moyen (14) permettant d'augmenter le gain du récepteur d'une sensibilité minimum, à l'instant d'émission prédéterminé (t₀), à une sensibilité maximum, sur une période de temps équivalente au retard ; et
un moyen permettant de maintenir, de façon nominale, le gain du récepteur au niveau qui prévaut à l'instant où le signal radio est reçu.

6. Récepteur selon la revendication 5, caractérisé en outre par :
un moyen permettant de déterminer une fonction d'atténuation du signal radio ; et
un moyen permettant d'augmenter le gain du récepteur en tant que réciproque nominale de la fonction d'atténuation de la sensibilité minimum, à l'instant prédéterminé de l'émission, à la sensibilité maximum, au cours de la période de temps.

7. Récepteur selon la revendication 5 ou la revendication 6, comprenant en outre un moyen permettant d'égaliser une amplitude du signal radio reçu afin de maintenir constant un niveau de signal de sortie du récepteur.

8. Récepteur selon l'une quelconque des revendications 5, 6 ou 7, comprenant en outre un moyen permettant de calibrer la sensibilité du récepteur pour des conditions de propagation locale.

9. Récepteur selon l'une quelconque des revendications 5 à 8, comprenant en outre un moyen permettant de calibrer la sensibilité du récepteur pour un terrain local.
